Europäisches Patentamt

European Patent Office

Office européen des brevets

(19)

(11) Veröffentlichungsnummer: **0 343 148**
**A2**

# (12) EUROPÄISCHE PATENTANMELDUNG

(21) Anmeldenummer: **89890142.6**

(22) Anmeldetag: **17.05.89**

(51) Int. Cl.4: **C 04 B 16/06**

(30) Priorität: **17.05.88 AT 1287/88   11.11.88 AT 2777/88**

(43) Veröffentlichungstag der Anmeldung:
**23.11.89   Patentblatt   89/47**

(84) Benannte Vertragsstaaten:
**AT BE CH DE FR GB LI NL SE**

(71) Anmelder: **Basta, Walter**
**Zanaschkagasse 12/29/3**
**A-1120 Wien   (AT)**

(72) Erfinder: **Basta, Walter**
**Zanaschkagasse 12/29/3**
**A-1120 Wien   (AT)**

(54) **Speziell behandelte Kunststoffaser zur Baustoffverbesserung.**

(57) Die Erfindung betrifft speziell behandelte Kunststoff-Fasern insbes. aus Polypropylen oder Recycling-Altplastik zur Baustoffverbesserung und Herstellung dünnerer und leichterer Elemente, z.B. Dachziegel, Schallschutzwände und anderer dünnwandiger Teile in Verbindung mit Beton, Mörtel, etc. sowie eine Zumischmaschine dazu.

EP 0 343 148 A2

Bundesdruckerei Berlin

## Beschreibung

### Speziell behandelte Polypropylenfasern oder aus Recycling-Altplastik hergestellte Kunststoff-Fasern, beigemischt zu Baustoffen, und zur Herstellung von Bauelementen und dünnwandigen Teilen, sowie Zumischmaschinen.

Stand der Technik:

Derzeit werden zur Herstellung von Bauteilen und zur Verstärkung von hydraulisch abbindbaren oder gebundenen Baumaterialien wie Beton, Mörtel, Zement/Sandmischung etc. folgende Fasertypen verwendet:

    a) Stahlfasern
    b) Glasfasern (alkaliresistent)
    c) Carbonfasern
    d) Fasern aus polymeren Kunststoffen

Zusätzlich seien noch Asbestfasern erwähnt, die jedoch wegen Gesundheitsgefährdung in verschiedenen Staaten verboten sind.

Zum Stand der Technik werden folgende Bemerkungen dargelegt:

ad a)

Stahlfasern können nur in bestimmten Längen (max 35 mm) dem Frischbeton beigegeben werden, sodaß die wichtige Kennzahl der Faseranzahl pro Querschnittsfläche beschränkt bleiben muß. Weiters ist bei Stahlfaserbeton auf die Korrosionsneigung oberflächennaher Fasern Rücksicht zu nehmen. Dies bedeutet bei der Auslegung der Konstruktion einen erhöhten Materialeinsatz.

ad b)

Bei Glasfasern sind die relativ hohen Kosten in Betracht zu ziehen und die Tatsache, daß somit nur dünnwandige Bauteile bis ca. 2,0 cm wirtschaftlich herstellbar sind. Ein weiteres Problem dieser Faser ist ein Zusammenballen beim Mischvorgang.

ad c)

Aufgrund der geringen Marktanteile der Carbonfasern sind Vergleichswerte gegenwärtig in Europa nicht erhebbar, weiters scheiden sie bereits aus wirtschaftlichen Gründen von vornherein aus (ca. öS 300,00/kg).

ad d)

Die Anwendung von Polypropylen(PP)-Fasern scheiterte bisher daran, daß die Kunststoffe wegen ihrer glatten Oberflächenbeschaffenheit nur schwer eine Bindung mit dem Bindemittel (Kiesbeton, Sandbeton, Kunststein, Perlit oder Flugaschebeton, Zement oder Kalkmörtel, Wärmedämmungsmörtel, Glasbeton oder Zementschaum, Gipsmörtel usw.) eingegangen sind.

Die Erfindung betrifft ein Verfahren zur Herstellung von dünnwandigen Bauteilen, wie z.B. Dachziegel, Fassadenplatten, Behälter, Rohre, Abdeckplatten, Schächte und Kanäle, Bahnplatten, Estriche, Schallschutz- und Sicherheitsbauten, schalldämmende Anlagen und Gebäude, Kunstgießungen, Gefäße, Straßenbau, Flughafenpisten, Dammbauten, Bodenplatten, Profilteile, sowie generelle Zumischung zu Baumaterialien.

Die bisherigen Nachteile von Baumaterial wie Beton, Mörtel, und Gips oder ähnliche ist die Rissbildung bei der Schrumpfung, die Sprödheit sowie die niedrige Schlagfestigkeit und die ungünstigen Schallübertragungseigenschaften des Baustoffes.

Durch das Beimischen von speziell behandelten Kunststofffasern lt. folgender Beschreibung und Patentansprüchen wird die Rißfestigkeit, die Druckfestigkeit, die Berstfestigkeit und die Zähigkeit wesentlich verbessert. Ebenso ergibt sich durch die erhöhte Zähigkeit ein Absinken der Eigenresonanz, wodurch ein schalldämmender Effekt im Vergleich zu herkömmlichen Baustoffen entsteht. Dieses neue Baumaterial eignet sich daher besonders für die Herstellung von Fertigteilen im Wohnbaubereich, was ebenso für Estriche zutrifft. Des weiteren ist auch der Schalldämmungseffekt bei Bahnplatten vorteilhaft. Durch Beimischung der erfindungsgemäßen Fasern wird die Abriebfestigkeit durch dynamische Beanspruchung wesentlich höher und durch die Verbesserung aller Parameter kann Feinarmierungsstahl und Material eingespart werden.

Die spezielle Behandlung von Kunststoff- bzw. Polypropylenfasern kann erfindungsgemäß auf 3 Arten erfolgen:

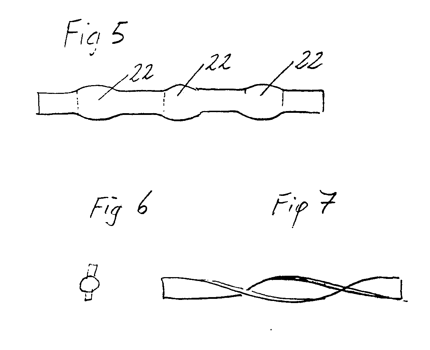

1) Durch induktiv geheizte Walzen können die Fasern individuell im Querschnitt verformt werden, ohne daß das Fasermaterial beschädigt wird. Ein Pressen im kalten Zustand würde die Zugfestigkeit der Fasern entscheidend vermindern, was durch die Erwärmung verhindert wird. Durch die Querschnittsverformung (Fig. 5) ergibt sich eine Verankerung mit dem Baustoff in Zugrichtung der Faser.

2) Die nach dem Extrudieren heißen Fasern werden durch ein Kühlmedium (z.B. Luft) einem Kälteschock von minus 30 ° - 50 ° C ausgesetzt. Dadurch wird die Oberfläche mit feinen Rissen überzogen. Die Tiefe der Risse ist durch die Dauer der Kälteeinwirkung kontollierbar. Die Risse dürfen nur geringfügig gehalten werden, damit das E-Modul nicht verschlechtert wird. Durch die sich somit ergebende Rauhigkeit der Oberfläche wird die Faser hydrophiler und verbindet sich besser mit dem Baumaterial.

3) Die dritte Methode besteht darin, die Faser im heißen Zustand nach dem Reckvorgang mit Quarz oder Mikro -Silikatstaub unter bestimmtem Druck zu bestrahlen. Der Druck muß so entsprechen, daß die Körner zur Hälfte in die Oberfläche der Faser eindringen und nach dem Abkühlen mit dieser fest verbunden sind. Die so behandelte Faser zeigt eine rundum kristallin beschichtete Oberfläche, die sich ideal mit dem Baumaterial verbindet, da eine kristalline Reaktion abläuft.

Diese drei Methoden können sowohl einzeln als auch in Kombination angewendet werden.
Um die Staubentwicklung bei Methode 3 zu begrenzen, sind zwei Wasserwannen vorgesehen, durch welche die Fasern hindurchgeführt werden.

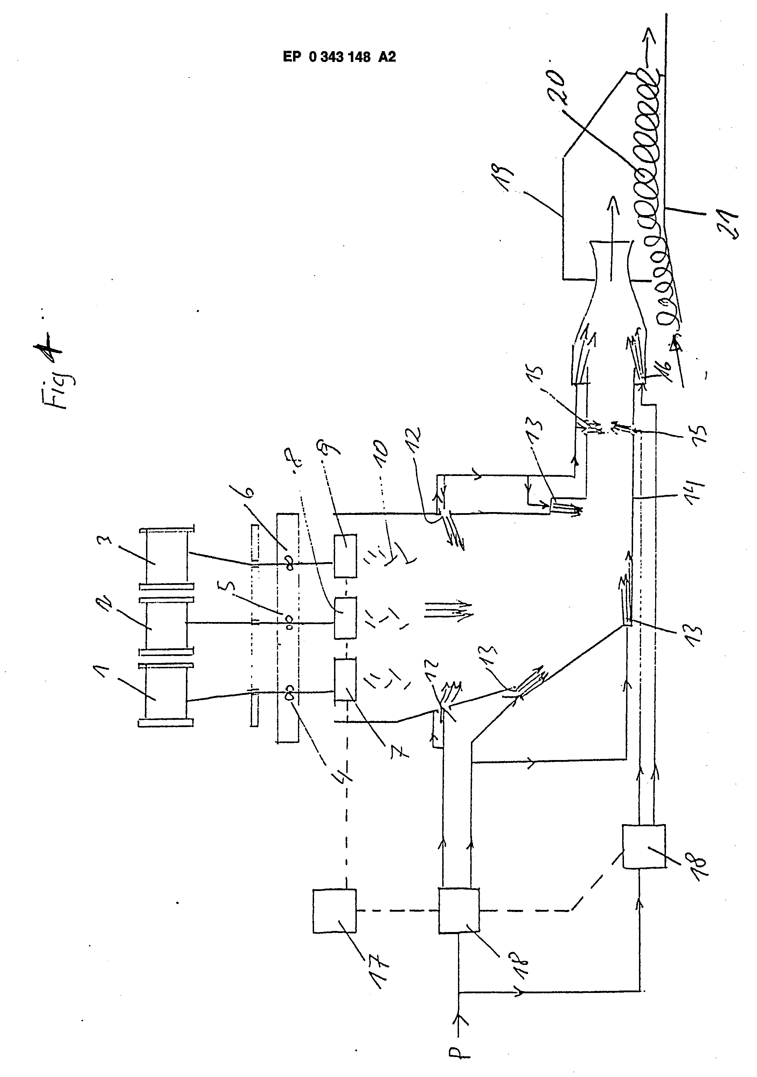

Das Schneiden der Fasern in die gewünschten Längen kann mechanisch durch Messer erfolgen. Infolge der raschen Abstumpfung der Werkzeuge ist diese Methode mit Unterbrechungen verbunden. Vorzugsweise wäre das Schneiden mit Ultraschall, mit scharfem Wasserstrahl oder Laser anzuwenden. Bei Großbaustellen, oder Transportbeton könnte zweckmäßig sein, das Schneiden erst an Ort und Stelle mittels einer Faserzuführmaschine (Fig. 4) durchzuführen.

Dabei sind auch verschiedene Faserlängen oder Durchmesser gleichzeitig dem Beton zumischbar, was eine Verbesserung der Matrix ergibt. Die Häckselmesser können auch hier durch z.B. Wasserstrahlschneidung ersetzt werden, um die Messerabnützung zu vermeiden, da die Fasern durch den Reckvorgang sehr zähe sind und durch die bestäubte Quarzsandoberfläche die Messer rasch abnützen.

Die Verwendung von Kunststoff-Fasern für die Bauindustrie erschließt ein gutes Verfahren zur Beseitigung von Plastikabfällen, die in großen Mengen anfallen. Abfälle aus Platten oder Folien können in geeigneten Maschinen in dünne Streifen geschnitten werden, die gegebenenfalls nach Oberflächenbearbeitung wie Anrauhen auf mechanischem oder chemischem Weg als Fasern dem Beton zugemischt werden können. Weiters kann es vorteilhaft sein, die Abfälle einzuschmelzen oder aufzulösen und die gewünschten Fasern mittels Extrusion herzustellen. Fig. 5 zeigt eine bevorzugte Faserform in Seitenansicht, bei der sich die Querschnittsfläche periodisch ändert, wodurch die Fasern im Beton fest verankert sind. Die übrigen Figuren zeigen verschiedene Querschnittsformen und sind von selbst verständlich.

Die Form der gehackten oder extrudierten Schnitzel kann breit variieren. Wesentlich ist, daß die Fasern im Beton gut verankert sind, wobei jedoch darauf geachtet werden muß, daß sich die Fasern beim Mischen mit dem nassen Beton nicht zu Klumpen zusammenballen. Derartige Schnitzel können z.B. Dimensionen von 0,1 bis 3 mm Stärke und 2 bis 60 mm Länge aufweisen.

Das Zerteilen von Plastikabfällen kann bevorzugt bei reduzierten Temperaturen erfolgen, bei denen das Plastik spröde ist.

Die Erfindung betrifft auch die Anwendung von Fasern aus der Altplastikverwertung zur Herstellung eines hydraulisch abbindbaren oder gebundenen Baumaterials wie Beton, Mörtel, Zement/Sandmischung etc.

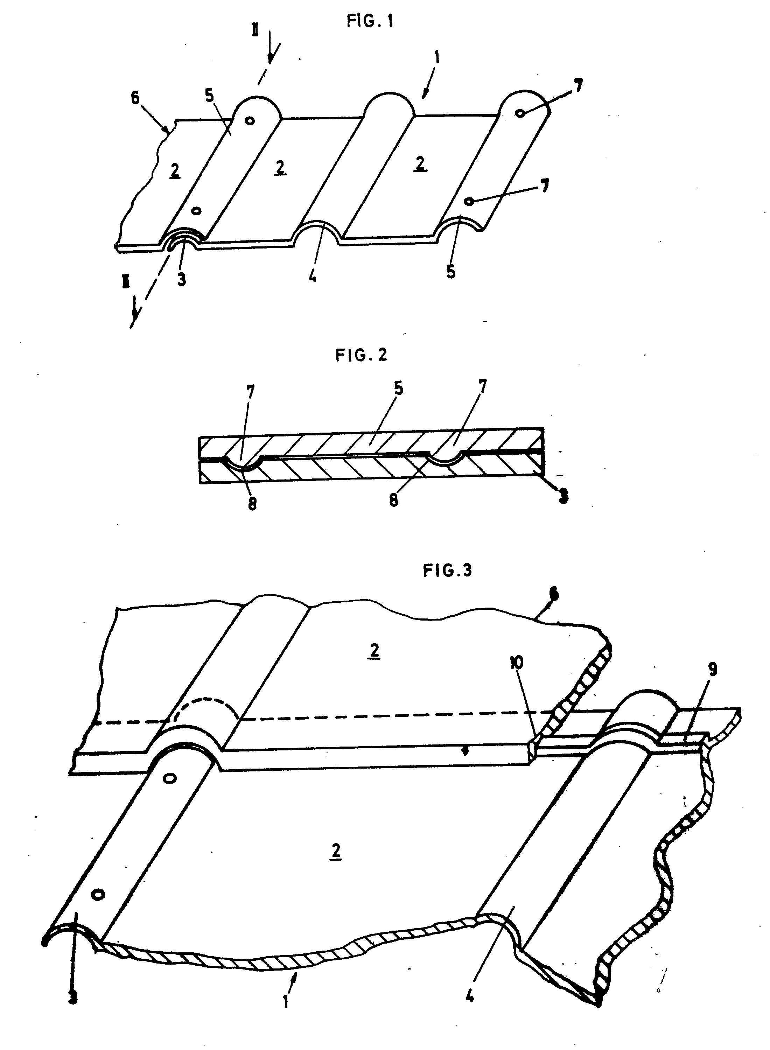

In bevorzugter Weise können erfindungsgemäße Bauelemente als Dachdeckelemente oder zur Fassadenabdeckung verwendet werden. Herkömmliche Dachdeckelemente aus Beton sind aus Festigkeitsgründen relativ dick und damit schwer. Mit dem erfindungsgemäßen Baumaterial ist es möglich, solche Dachdeckungen dünn und somit leicht vorzusehen, wobei dennoch die erforderliche Trag- und Verlegefestigkeit erzielt wird. In den angeschlossenen Zeichnungen sind zwei Ausführungsbeispiele für derartige Dachdeckungen dargestellt, wobei Fig. 1 die Schrägansicht auf zwei nebeneinander liegende und sich teilweise überlappende Dachziegel zeigt. Fig. 2 ist ein Schnitt nach der Linie II-II in Fig. 1. Fig. 3 zeigt eine Schrägansicht auf die Überlappungsbereiche zweier Dachziegel in einer anderen Ausführungsform.

Die erfindungsgemäßen Bauelemente zeichnen sich durch leichtes Gewicht, erhöhte Wasserdichtheit und durch größere erzielbare Flächenabmessungen aus. Bei Flächenabmessungen von 30 x 40 cm oder 30 x 50 cm genügt eine Dicke von 0,5 bis 2 cm, bevorzugt werden etwa 1,5 cm. Die Bauelemente können aus dem Baumaterial entweder in Formen gepreßt oder gegossen werden.

Die Bauelemente gemäß Fig. 1 sind als sogenannte Doppelziegel vorgesehen. Das Bauelement 1 besteht gemäß Fig. 1 aus plattenförmigen Abschnitten 2 und drei bogenförmigen Rippen 3, 4 und 5. Die Rippe 3 ist kleiner gehalten, sodaß sie von der Rippe 5 des anschließenden Bauelementes 6 übergriffen werden kann. Die Rippe 4 dient einerseits der Versteifung des Bauelementes und hat einen optischen Effekt.

Im Verlauf der Rippe 5 sind Vorsprünge 7 vorgesehen, die in entsprechende Ausnehmungen 8 der darunterliegenden Rippe 3 eingreifen, wie dies in Fig. 2 dargestellt ist. Dadurch kommt es zu einer Verrastung zwischen den Dachdeckungselementen. Gleiche Vorkehrungen können auch an jenen Stellen getroffen werden, an denen sich die Dachziegelreihe mit der nächsten oberhalb liegenden Dachziegelreihe überlappen. In Fig. 3 ist eine Anordnung dargestellt, bei der die Bauelemente an dem einen Ende eine nach oben vorspringende Rippe 9 aufweisen, die in eine entsprechende Nut 10 des darüberliegenden Bauelementes eingreift. Diese Rippen-Nut verbindung bewirkt außerdem eine größere Wasserdichte. Weiters können die Rippen 9 der Versteifung des Bauelementes dienen.

In bevorzugter Weise erhalten die zuvor beschriebenen Baumaterialienmischungen zur Herstellung der erfindungsgemäßen Bauelemente einen Zuschlag von 1 bis 30 Gew.-% feinpulvriger Zuschlagstoffe, in bevorzugter Weise Silikatstaub, wie er von der Firma Elkem unter der Bezeichnung "Mikrosilika" vertrieben wird. Der Silikatstaub kann als Pulver oder als Suspension zugemischt werden. Die genannten Gewichtsprozent beziehen sich auf das Zementgewicht des Bauelementes. Durch die Zugabe des feinpulvrigen Zuschlagstoffes erfolgt eine Erhöhung der Dichte und der Haftfestigkeit zu den Polypropylenfasern. Weiters ist es vorteilhaft, dem Baumaterial bei der Anfertigung der Bauelemente ein oberflächenaktives Mittel als Fließmittel zuzugeben, wobei die günstigen Mengen von jedem Fachmann empirisch ermittelbar sind.

Zur Färbung der erfindungsgemäßen Bauelemente können übliche Farbstoffe verwendet werden, wie sie schon bisher in der Baustoffindustrie üblich sind.

## Patentansprüche

1. Kunststoff-Fasern zur Baustoffverbesserung, dadurch gekennzeichnet, daß diese insbes. aus oberflächenbehandeltem Polypropylen oder Recycling-Altplastik hergestellt sind.

2. Kunststoff-Fasern nach Anspruch 1, dadurch gekennzeichnet, daß diese hydrophilisiert und aufgerauht sind.

3. Kunststoff-Fasern nach Anspruch 1 und 2, dadurch gekennzeichnet, daß diese im heißen Zustand verformt werden.

4. Kunststoff-Fasern nach Anspruch 1, 2 und 3, dadurch gekennzeichnet, daß die Fasern im heißen Zustand einem Kälteschock ausgesetzt werden, womit sich feine Oberflächensprünge ergeben.

5. Kunststoff-Fasern nach Anspruch 1, 2, 3 und 4, dadurch gekennzeichnet, daß Mikrosilikatstaub oder feiner Quarzsand unter bestimmtem Druck auf die Faseroberfläche gestrahlt wird.

6. Kunststoff-Fasern nach Anspruch 1, 2, 3, 4 und 5, dadurch gekennzeichnet, daß die Fasern entlang ihrer Längserstreckung einen periodisch schwankenden Durchmesser und/oder im Querschnitt eine vom Kreis verschiegerippte Form, ev. Spiralform, aufweisen.

7. Kunststoff-Fasern nach Anspruch 1 bis 6, dadurch gekennzeichnet, daß zu den Fasern und Baumaterialien ein oberflächenaktives Mittel als Fließmittel und ein Benetzungsmittel oder ein Haftvermittler zugefügt wird.

8. Kunststoff-Fasern nach Anspruch 1 bis 7, dadurch gekennzeichnet, daß mit dem beizumischenden Baumaterial 1 bis 30 Gew.-% (bezogen auf das Zementgewicht), feinpulvriger Zusatzstoff, bevorzugt Silikatstaub, zugesetzt wird.

9. Kunststoff-Fasern nach Anspruch 1 bis 8, dadurch gekennzeichnet, daß sie insbes. soweit Baustoffe wie Beton, Mörtel, etc., verbessern, sodaß dünnwandige Elemente wie z.B. Dachziegel, Schallschutzwände, Platten, Konstruktionen, Abdeckungen usw. rissfreier, wasserdichter, leichter und schalldämmender hergestellt werden können.

10. Kunststoff-Fasern nach Anspruch 1 bis 9, dadurch gekennzeichnet, daß mittels Maschine eine gleichmäßige Verteilung der Fasern im Material gegeben ist und die Längen und Stärken der Fasern dem Baustoff individuell anpaßbar sind.

FIG. 1

FIG. 2

FIG.3

Fig 4

Fig 5

22    22    22

Fig 6        Fig 7